# EUROPEAN PATENT SPECIFICATION

(11) **EP 2 073 506 B1**
(45) Date of publication and mention of the grant of the patent: **03.05.2017**
(21) Application number: 07291615.8
(22) Date of filing: 21.12.2007
(51) Int. Cl.: H04L 29/12, H04L 12/28

(54) **Method for resolving a logical user address in an aggregation network**
Verfahren zum Klären einer logischen Benutzeradresse in einem Aggregationsnetz
Procédé pour résoudre une adresse d'utilisateur logique dans un réseau d'agrégation

(43) Date of publication of application: 24.06.2009
(73) Proprietor: ALCATEL LUCENT, 92100 Boulogne-Billancourt (FR)
(72) Inventor: Cetin, Riza, 2018 Antwerp (BE)
(74) Representative: ALU Antw Patent Attorneys

(56) References cited:
- EP-A- 1 589 705
- WO-A-2006/018420
- US-A1- 2003 037 163
- DSL FORUM: "Migration to Ethernet-Based DSL Aggregation" INTERNET CITATION, [Online] XP002411174 Retrieved from the Internet: URL:http://www.dslforum.org/techwork/tr/TR -101.pdf> [retrieved on 2006-12-11]
- KAREL SLAVICEK ED - YEVGENI KOUCHERYAVY ET AL: "Maximum Frame Size in Large Layer 2 Networks" NEXT GENERATION TELETRAFFIC AND WIRED/WIRELESS ADVANCED NETWORKING LECTURE NOTES IN COMPUTER SCIENCE, SPRINGER BERLIN HEIDELBERG, BE, vol. 4712, 1 January 1900 (1900-01-01), pages 409-418, XP019070771 ISBN: 978-3-540-74832-8

## Description

The present invention relates to logical address resolution in aggregation (or access) networks.

Address Resolution Protocol (ARP) provides a source host that attempts to forward a data unit to a destination host that is assigned a logical (or network) address with the ability to resolve this logical address into a physical (or hardware) address, which physical address being actually used for forwarding the data unit to that specific destination host. The source and destination hosts are connected via a transmission medium or network.

An example of a data unit is an Ethernet frame, or any Layer 2 (L2) data unit.

An example of a logical address is an internet Protocol (IP) address, or any Layer 3 (L3) address. The logical address is either the logical destination address of the data unit, or some logical address retrieved from a routing table, also known as a next hop (or gateway) address.

An example of a physical address is a Medium Access Control (MAC) address, or any L2 address.

An example of a transmission medium or network is a Local Area Network (LAN), or a Metropolitan Area Network (MAN), and typically comprises transmission links and/or hubs and/or bridges and/or switches. The transmission medium or network forms a broadcast domain whereby data units bound to some predefined broadcast address are expected to be listened and processed by all the receiving hosts.

In a first step, the source host broadcasts an ARP request towards all the attached nodes, which request comprising the logical address that needs to be resolved.

In a second step, a destination host that is assigned that logical address answers to the source host with a particular physical address associated with the destination host.

In a third step, the source host uses this particular physical address as destination address of the data unit and transmits the data unit, which ultimately reaches the destination host.

The scope of the broadcast domain can further be restricted to a few hosts by means of a virtual broadcast domain that is logically defined within the initial broadcast domain. This is achieved by encoding into the to-be-forwarded data unit an identifier that identifies a particular virtual broadcast domain wherein the forwarding of the data unit shall be constrained.

An example of a virtual broadcast domain is a virtual Local Area Network (VLAN).

Typically, a port of an Ethernet bridge is assigned to one or more VLAN, and frames tagged with a particular VLAN are only forwarded towards the ports that belong to that VLAN. Although Ethernet frames bound to a particular MAC address are only directed towards the port to which the corresponding device is attached (by self-learning the source MAC addresses of the incoming frames), broadcast frames and frames bound to unlearned MAC addresses keep on being flooded over all the ports, yet within the scope of the VLAN.

VLANs are rather useful for segregating (or isolating) user traffic within an aggregation network, such as an Ethernet Metropolitan Area Network (EMAN). Typically, the subscriber traffic is aggregated over distinct VLANs between the access node and the edge router. An IP interface of the edge router with a specific IP address is associated with all those VLANs (this is referred to as VLAN aggregation). This IP address is typically used as the next hop address for the upstream traffic.

Whenever a user IP address needs to be resolved, e.g. when there is downstream traffic bound to that IP address and that IP address is not yet associated with any hardware address, then an IP interface over which the traffic is to be forwarded is determined from the routing table (based on the destination user IP address and a subnet mask), and an ARP request is flooded over all the VLANS that are aggregated under this IP interface. The destination host, or an access node that acts as an ARP proxy, answers the ARP request by sending back an ARP reply that contains an hardware address associated with that IP address.

A drawback of this method is that the number of ARP requests, and thus the induced ARP traffic load, increases as the number of VLANS in the aggregation group does. If there are as many VLANs as there are users, this solution is clearly not scalable.

The European application EP 1 589 705 A2, filed on April 1, 2005 by Alcatel, discloses a method for configuring an access node to provide residential routing functionality comprising populating a fixed match forwarding table during IP address assignment for the residential router instance, associating the residential router instance exclusively with a respective virtual local area network (VLAN) identifier, forwarding upstream traffic dependent upon the respective VLAN identifier and forwarding downstream traffic dependent upon a host entry designated by the downstream traffic being determined.

It is an object of the present invention to reduce the ARP traffic load within an aggregation network while still allowing for correct user traffic segregation.

The objectives of the present invention are achieved and the aforementioned shortcomings of the prior art are overcome by a method for resolving a particular logical address assigned to a particular user device coupled through an access node and an aggregation network to a network node, and comprising:
- broadcasting a request whereby said particular logical address is to be resolved,
- sending back a reply whereby said particular logical address is associated with a particular physical address,
wherein said method further comprises:
- broadcasting said request within the scope of an outer virtual broadcast domain configured within said aggregation network, said outer virtual broadcast domain inter-connecting said access node to said network node and being identified by means of an outer identifier,
- sending back said reply through an inner virtual broadcast domain configured within said outer virtual broadcast domain, said inner virtual broadcast domain being associated with said particular user device for user traffic segregation and being identified by means of an inner identifier,
- registering said particular logical address as being associated with said particular physical address, said outer identifier and said inner identifier.

Address resolution according to the invention closely relies on e.g. VLAN stacking, whereby two or more VLANs are stacked on top of each other. Typically, an Ethernet bridge pulls VLAN identifiers from a VLAN stack of an incoming Ethernet frame (up to a certain extend depending on the exact VLAN stack implementation of that bridge) and determines accordingly the exact forwarding scope that applies to that data unit, starting from the outer most VLAN up to the inner most VLAN.

The present invention makes an advantageous use of VLAN stacking by broadcasting the ARP requests through an outer VLAN towards one or more access nodes, and by replying through a specific inner VLAN which is associated with the particular user, the logical address of which needs to be resolved. The ARP requests are no longer broadcast over each and every inner VLAN and the induced ARP traffic load is noticeably reduced.

The present invention is further advantageous in that a restricted set of IP addresses is used at the edge router (one per outer VLAN).

The particular physical address that is associated with the particular logical address is either a physical address associated with the user device, such as a MAC address of a gateway, a router, a client terminal, etc, or a physical address associated with the access node, such as a physical address of a line termination unit coupled to the particular user device.

In both cases, the ARP request is proxied by the access node so as to avoid advertising the ARP traffic towards all the users, although it is not strictly speaking a requirement for the present invention.

The second embodiment is further advantageous in that user MAC addresses are hidden to the aggregation network, meaning there will far less physical addresses to learn in the aggregation network.

The present invention also relates to a network node adapted to resolve a particular logical address assigned to a particular user device coupled through an access node and an aggregation network to said network node, and further adapted:
- to broadcast a request whereby said particular logical address is to be resolved,
- to receive a reply whereby said particular logical address is associated with a particular physical address,
*wherein* said network node is further adapted:
- to broadcast said request within the scope of an outer virtual broadcast domain configured within said aggregation network, said outer virtual broadcast domain inter-connecting said access node to said network node and being identified by means of an outer identifier,
- to receive said reply through an inner virtual broadcast domain configured within said outer virtual broadcast domain, said inner virtual broadcast domain being associated with said particular user device for user traffic segregation and being identified by means of an inner identifier,
- to register said particular logical address as being associated with said particular physical address, said outer identifier and said inner identifier.

An example of such a network node is an edge router.

Embodiments of a network node according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

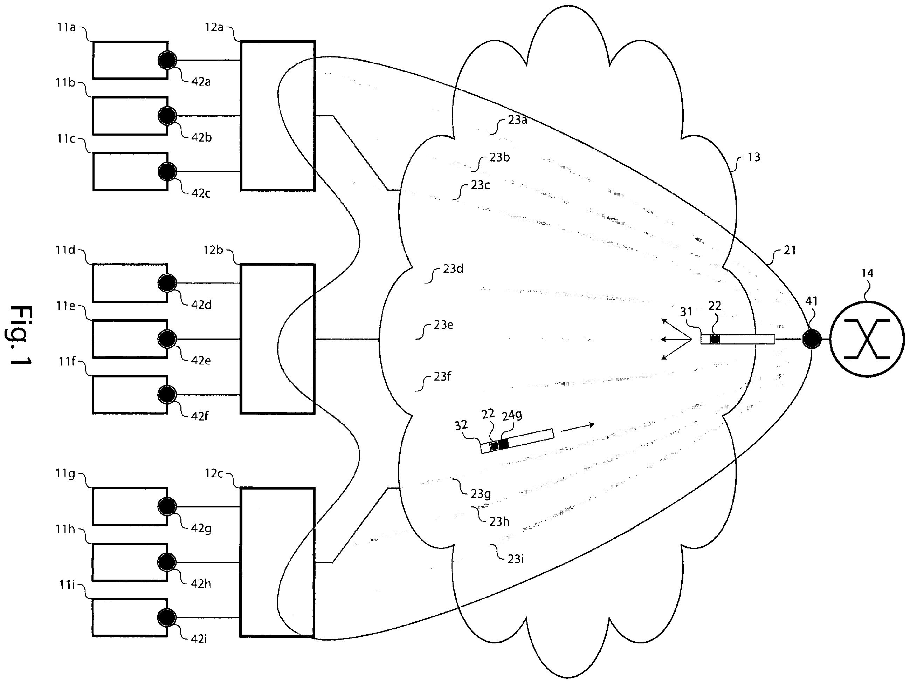

- fig. 1 represents a communication system.

There is shown in fig. 1 a communication system 1 comprising:
- Customer Premises Equipment (CPE) 11,
- access nodes 12,
- an aggregation network 13,
- an edge router 14.

CPEs 11a to 11c are coupled to the access node 12a, CPEs 11d to 11f are coupled to the access node 12b, and CPEs 11g to 11i are coupled to the access node 12c.

The access nodes 12 and the edge router 14 are coupled to the aggregation network 13. The edge router 14 is further coupled to a service provider network, and still further to the internet (not shown).

CPEs 11 refer to any subscriber device such as a gateway, a router, a client terminal, etc.

The access nodes 12 refer to any wireline/mobile/wireless access node, such as a Digital Subscriber Line Access Multiplexer (DSLAM), an optical terminal unit (for Fiber To The Node (FTTN) deployment), a 3G/4G mobile station, a wimax/wifi wireless station, etc.

In a preferred embodiment of the present invention, the communication system is IP-based and the aggregation network is an EMAN, which further comprises Ethernet switches and interconnection links (not shown).

Downstream communication refers to communication from the edge router 14 towards CPEs 11, and upstream communication refers to communication from CPEs 11 towards the edge router 14.

An outer VLAN 21 is configured over the aggregation network 13 for inter-connecting the access nodes 12 and the edge router 14, thereby defining a virtual broadcast domain. The outer VLAN 21 is assigned an outer VLAN identifier 22.

Inner VLANs 23 are configured within the outer VLAN 21 between the access nodes 12 and the edge router 14 for segregating user traffic between each other. There are as many inner VLANs configured as there are users to connect. The inner VLANs 23 are assigned inner VLAN identifiers 24.

The access nodes 12 are adapted to proxy the ARP traffic on behalf of their client devices, presently CPEs 11. More specifically, the access nodes 12 are adapted to receive an ARP request whereby a particular user IP address is to be resolved, which request being broadcasted through an outer VLAN, to identify a particular user that is assigned that particular IP address, to determine a particular MAC address of the access node associated with that particular user, such as the MAC address of a line termination unit coupled to that particular user, to further determine an inner VLAN within the outer VLAN whereto traffic from that particular user is to be forwarded, and to return an ARP reply through that inner VLAN to the requesting host comprising that particular MAC address.

The access nodes 12 are further adapted to snoop Direct Host Configuration Protocol (DHCP) or Point-to-Point Protocol (PPP) traffic so as to learn the one-to-one association between a user MAC address, a user IP address, and a user port from which a MAC address of the access node is derived. The mapping of that user to a specific outer VLAN and inner VLAN can be similarly learned, or can be pre-configured by e.g. a network manager. All those associations are kept in a local data repository for further retrieval.

The edge node 14 is adapted to resolve a particular user IP address by first identifying an IP interface bound to this user IP address, and an outer VLAN aggregated under this IP interface, next by broadcasting an ARP request through the outer VLAN, to get an ARP reply through an inner VLAN within the outer VLAN, which ARP reply including the requested MAC address, and to register in a local data repository (e.g., an ARP cache) the user IP address as being associated with that MAC address, and the outer and inner VLAN identifiers.

An operation of this embodiment follows with reference to fig. 1.

Initially, CPE 11 are assigned IP addresses 42. similarly, the interface connecting the edge router 14 to the aggregation network 13 is assigned an IP address 41. The IP addresses 41 and 42 belong to the same subnet.

The outer VLAN 21 and the inner VLANs 23 are aggregated under the IP interface 41.

upon receipt of a downstream IP datagram bound to, let us say IP address 42g (i.e., CPE 11g), and if the IP address 42g is not associated yet with any MAC address, or if the corresponding entry in the ARP cache expired, then the edge router 14 broadcasts an ARP request 31 towards the access nodes 12 for resolving the IP address 42g into a MAC address. The ARP request 31 comprises the broadcast MAC address FF:FF:FF:FF:FF:FF as destination MAC address, and is tagged with the outer VLAN identifier 22. consequently, the ARP request 31 is broadcasted within the scope of the outer VLAN 21 towards the access nodes 12.

The access node that has registered this user IP address in its data repository, presently the access node 12c, determines the inner VLAN associated with the IP address 42g, presently the inner VLAN 23g, and one of its own MAC address as being associated with that user. The access node 12c encodes that MAC address into an ARP reply 32, tags the ARP reply 32 with the outer VLAN identifier 22 and the inner VLAN identifier 24g, and sends the ARP reply 32 with as destination MAC address the source MAC address of the ARP request 31. Consequently, the ARP reply 32 is forwarded within the scope of the outer VLAN 21, and further within the scope of the inner VLAN 23g, towards the edge router 14.

upon receipt of the ARP reply 32, the edge router 14 stores the association between the IP address 42g, the corresponding MAC address, the outer VLAN identifier 22 and the inner VLAN identifier 24g. Eventually, the edge router 14 forwards the pending payload with that MAC address as destination MAC address. This MAC address is substituted at the access node 12c before further forwarding towards CPE 11g (referred to as L2+ forwarding model).

In an alternative embodiment of the present invention, the outer VLAN 21 and the inner VLANs 23 extend through the access node 12 up to CPEs 11 and VLAN tagging is performed by CPE 11. The outer and inner VLAN identifiers can be obtained e.g. by means of DHCP.

The access nodes 12 keep on proxying the ARP requests for security issue, yet with the MAC addresses of the attached user devices instead of their own MAC address.

By so doing, MAC address substitution in the access nodes 12 is no longer mandatory, and the forwarding of Ethernet frames is straightforward (referred to as L2 forwarding model). Yet, the EMAN network 13 has to learn all the attached user MAC addresses.

Although, the preferred embodiment was described with reference to IP, Ethernet, VLAN and ARP paradigms, the present invention is not restricted thereto and may find applications in various network environments and communication technologies.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. **A method** for resolving **a particular logical address** (42g) assigned to **a particular user device** (11g) coupled through **an access node** (12c) and **an aggregation network** (13) to **a network node** (14), and comprising:
- broadcasting **a request** (31) whereby said particular logical address is to be resolved,
- sending back **a reply** (32) whereby said particular logical address is associated with a **particular physical address,**
*wherein* said method further comprises:
- broadcasting said request within the scope of **an outer virtual broadcast domain** (21) configured within said aggregation network, said outer virtual broadcast domain interconnecting said access node to said network node and being identified by means of **an outer identifier** (22),
- sending back said reply through **an inner virtual broadcast domain** (23g) configured within said outer virtual broadcast domain, said inner virtual broadcast domain being associated with said particular user device for user traffic segregation and being identified by means of **an inner identifier** (24g),
- registering said particular logical address as being associated with said particular physical address, said outer identifier and said inner identifier.

2. **A method** according to claim 1, *wherein* said outer virtual broadcast domain and said inner virtual broadcast domain are virtual Local Area Networks.

3. **A method** according to claim 1 or 2, *wherein* said particular physical address is a physical address of said access node.

4. **A method** according to claim 1 or 2, *wherein* said particular physical address is a physical address of said particular user device.

5. **A network node** (14) adapted to resolve **a particular logical address** (42g) assigned to **a particular user device** (11g) coupled through **an access node** (12c) and **an aggregation network** (13) to said network node, and further adapted:
- to broadcast **a request** (31) whereby said particular logical address is to be resolved,
- to receive **a reply** (32) whereby said particular logical address is associated with **a particular physical address,**
*wherein* said network node is further adapted:
- to broadcast said request within the scope of **an outer virtual broadcast domain** (21) configured within said aggregation network, said outer virtual broadcast domain inter-connecting said access node to said network node and being identified by means of **an outer identifier** (22),
- to receive said reply through **an inner virtual broadcast domain** (23g) configured within said outer virtual broadcast domain, said inner virtual broadcast domain being associated with said particular user device for user traffic segregation and being identified by means of **an inner identifier** (24g),
- to register said particular logical address as being associated with said particular physical address, said outer identifier and said inner identifier.

## Patentansprüche

1. **Verfahren** zum Klären **einer bestimmten logischen Adresse** (42g), die **einer bestimmten Benutzervorrichtung** (11 g) zugewiesen ist, die über **einen Zugangsknoten** (12c) und **ein Aggregationsnetz** (13) an **einen Netzwerkknoten** (14) gekoppelt ist, und umfassend:
- Rundsenden **einer Anfrage** (31), wobei die besagte bestimmte logische Adresse zu klären ist,
- Zurücksenden **einer Antwort** (32), wobei die besagte bestimmte logische Adresse **einer bestimmten physischen Adresse** zugeordnet ist,
*wobei* das besagte Verfahren weiterhin Folgendes umfasst:
- Rundsenden der besagten Anfrage innerhalb des Umfangs **eines äußeren virtuellen Rundsendebereichs** (21), der innerhalb des besagten Aggregationsnetzes konfiguriert ist, wobei der besagte äußere virtuelle Rundsendebereich den besagten Zugangsknoten mit dem besagten Netzwerkknoten verbindet und mittels **eines äußeren Identifikators** (22) identifiziert wird,
- Zurücksenden der besagten Antwort durch **einen inneren virtuellen Rundsendebereich** (23g), der innerhalb des besagten äußeren virtuellen Rundsendebereichs konfiguriert ist, wobei der besagte innere virtuelle Rundsendebereich der besagten bestimmten Benutzervorrichtung zur Trennung des Benutzerverkehrs zugeordnet ist und mittels **eines inneren Identifikators** (24g) identifiziert wird,
- Registrieren der besagten bestimmten logischen Adresse als zugeordnet zur besagten bestimmten physischen Adresse, zum besagten äußeren Identifikator und besagten inneren Identifikator.

2. **Verfahren** nach Anspruch 1, *wobei* der besagte äußere virtuelle Rundsendebereich und der besagte innere virtuelle Rundsendebereich virtuelle lokale Netzwerke sind.

3. **Verfahren** nach Anspruch 1 oder 2, *wobei* die besagte bestimmte physische Adresse eine physische Adresse des besagten Zugangsknotens ist.

4. **Verfahren** nach Anspruch 1 oder 2, *wobei* die besagte bestimmte physische Adresse eine physische Adresse der besagten bestimmten Benutzervorrichtung ist.

5. **Netzwerkknoten** (14), der angepasst ist zum Klären **einer bestimmten logischen Adresse** (42g), die **einer bestimmten Benutzervorrichtung** (11g) zugewiesen ist, die über **einen Zugangsknoten** (12c) und ein **Aggregationsnetz** (13) an den besagten Netzwerkknoten gekoppelt ist, und weiterhin angepasst:
- zum Rundsenden **einer Anfrage** (31), wobei die besagte bestimmte logische Adresse zu klären ist,
- zum Empfangen **einer Antwort** (32), wobei die besagte bestimmte logische Adresse **einer bestimmten physischen Adresse** zugeordnet ist,
*wobei* der besagte Netzwerkknoten weiterhin angepasst ist:
- zum Rundsenden der besagten Anfrage innerhalb des Umfangs eines äußeren **virtuellen Rundsendebereichs** (21), der innerhalb des besagten Aggregationsnetzes konfiguriert ist, wobei der besagte äußere virtuelle Rundsendebereich den besagten Zugangsknoten mit dem besagten Netzwerkknoten verbindet und mittels **eines äußeren Identifikators** (22) identifiziert wird,
- zum Empfangen der besagten Antwort durch **einen inneren virtuellen Rundsendebereich** (23g), der innerhalb des besagten äußeren virtuellen Rundsendebereichs konfiguriert ist, wobei der besagte innere virtuelle Rundsendebereich der besagten bestimmten Benutzervorrichtung zur Trennung des Benutzerverkehrs zugeordnet ist und mittels **eines inneren Identifikators** (24g) identifiziert wird,
- zum Registrieren der besagten bestimmten logischen Adresse als zugeordnet zur besagten bestimmten physischen Adresse, zum besagten äußeren Identifikator und besagten inneren Identifikator.

## Revendications

1. **Procédé** pour résoudre **une adresse logique particulière** (42g) affectée à **un dispositif d'utilisateur particulier** (11g) couplé par l'intermédiaire d'**un noeud d'accès** (12c) et d'**un réseau d'agrégation** (13) à **un noeud de réseau** (14), et comprenant les étapes suivantes :
- diffuser **une demande** (31) en conséquence de quoi ladite adresse logique particulière doit être résolue,
- renvoyer **une réponse** (32) en conséquence de quoi ladite adresse logique particulière est associée à **une adresse physique particulière,**
*dans lequel* ledit procédé comprend en outre les étapes suivantes :
- diffuser ladite demande à l'intérieur de la portée d'**un domaine de diffusion virtuel externe** (21) configuré à l'intérieur dudit réseau d'agrégation, ledit domaine de diffusion virtuel externe interconnectant ledit noeud d'accès audit noeud de réseau et étant identifié au moyen d'**un identificateur externe** (22),
- renvoyer ladite réponse par l'intermédiaire d'**un domaine de diffusion virtuel interne** (23g) configuré à l'intérieur dudit domaine de diffusion virtuel externe, ledit domaine de diffusion virtuel interne étant associé audit dispositif d'utilisateur particulier pour une séparation de trafic d'utilisateur et étant identifié au moyen d'**un identificateur interne** (24g),
- enregistrer ladite adresse logique particulière comme étant associée à ladite adresse physique particulière, audit identificateur externe et audit identificateur interne.

2. **Procédé** selon la revendication 1, *dans lequel* ledit domaine de diffusion virtuel externe et ledit domaine de diffusion virtuel interne sont des Réseaux locaux virtuels.

3. **Procédé** selon la revendication 1 ou 2, *dans lequel* ladite adresse physique particulière est une adresse physique dudit noeud d'accès.

4. **Procédé** selon la revendication 1 ou 2, *dans lequel* ladite adresse physique particulière est une adresse physique dudit dispositif d'utilisateur particulier.

5. **Noeud de réseau** (14) adapté pour résoudre **une adresse logique particulière** (42g) affectée à **un dispositif d'utilisateur particulier** (11 g) couplé par l'intermédiaire d'**un noeud d'accès** (12c) et d'**un réseau d'agrégation** (13) audit noeud de réseau, et en outre adapté :
- pour diffuser **une demande** (31) en conséquence de quoi ladite adresse logique particulière doit être résolue,
- pour recevoir **une réponse** (32) en conséquence de quoi ladite adresse logique particulière est associée à **une adresse physique particulière,**
*dans lequel* ledit noeud de réseau est en outre adapté :
- pour diffuser ladite demande à l'intérieur de la portée d'**un domaine de diffusion virtuel externe** (21) configuré à l'intérieur dudit réseau d'agrégation, ledit domaine de diffusion virtuel externe interconnectant ledit noeud d'accès audit noeud de réseau et étant identifié au moyen d'**un identificateur externe** (22),
- pour recevoir ladite réponse par l'intermédiaire d'**un domaine de diffusion virtuel interne** (23g) configuré à l'intérieur dudit domaine de diffusion virtuel externe, ledit domaine de diffusion virtuel interne étant associé audit dispositif d'utilisateur particulier pour une séparation de trafic d'utilisateur et étant identifié au moyen d'**un identificateur interne** (24g),
- pour enregistrer ladite adresse logique particulière comme étant associée à ladite adresse physique particulière, audit identificateur externe et audit identificateur interne.
